# FASCICULE DE BREVET EUROPEEN

(11) **EP 0 702 747 B1**
(45) Date de publication et mention de la délivrance du brevet: **20.05.1998**
(21) Numéro de dépôt: 94919728.9
(22) Date de dépôt: 17.06.1994
(51) Int. Cl.: E21B 33/127, F16L 11/08

(54) **OBTURATEUR GONFLABLE RENFORCE DE FOND DE PUITS**
VERSTÄRKTES AUFBLASBARES PACKERELEMENT ZUR VERWENDUNG IM BOHRLOCH
INFLATABLE REINFORCED DOWNHOLE PACKER

(30) Priorité: 17.06.1993 FR 9307317
(43) Date de publication de la demande: 27.03.1996
(73) Titulaire: HUTCHINSON, F-75008 Paris (FR)
(72) Inventeur: MAHIN, Daniel, F-37510 Savonnières (FR); BLIN, Philippe, F-37260 Monts (FR)
(74) Mandataire: Ramey, Daniel
(86) Numéro de dépôt international: FR9400732
(87) Numéro de publication internationale: WO9500738

(56) Documents cités:
- EP-A- 0 264 973
- CA-A- 2 081 395
- FR-A- 1 561 771
- GB-A- 2 099 541
- US-A- 2 643 722
- US-A- 3 542 127
- US-A- 5 205 567

## Description

L'invention concerne un dispositif de flexible haute pression dilatable et, notamment, un tel dispositif propre à être utilisé dans le domaine de l'exploitation des puits souterrains, en particulier ceux de pétrole et de gaz, mais qui trouve également application dans les domaines comme ceux des travaux de géologie ou de l'exploitation des mines.

Lorsqu'un dispositif de ce type est mis en oeuvre dans le domaine des forages gaziers ou pétroliers c'est le plus fréquemment pour servir d'obturateur d'une conduite de puits, et il est alors désigné sous le nom d'"obturateur gonflable" ou sous son nom anglais de "packer", gonflable ou dilatable. Dans le domaine des mines, de tels dispositifs sont généralement connus sous le nom de "cannes dilatables" et, quelle que soit la terminologie utilisée, de tels dispositifs comprennent une membrane tubulaire déformable, à matrice en matériau élastomère armée par des renforts, solidaire à ses deux extrémités d'embouts destinés au montage du dispositif sur un mandrin d'introduction dans le puits ou forage qu'il doit équiper. De tels dispositifs, qui trouvent également application lors de la mise en oeuvre de procédés de consolidation de sols par injection de ciment, pour des mesures de perméabilité par injection d'eau, pour des installations de prospection hydrogéologiques, etc... sont connus dans de nombreuses réalisations voir, par exemple, l'article de R.K. MODY et M. P. CORONADO intitulé "New Generation Inflatable Packing Elements" présenté à Houston, Texas, les 6-9 Mai 1991 à la "Offshore Technology Conference", ou encore FR-A-2 625 254, FR-A-2 582 077, FR-A-2 523 206, US-A-3 581 816, US-A-5 101 908, US-A-5 109 926, etc...

Lorsque des dispositifs de flexibles du type de ceux décrits ci-dessus sont utilisés dans le domaine de l'exploitation de forages pétroliers ou gaziers, par exemple et sans que cette indication ait quelque caractère limitatif que ce soit, pour des opérations de stimulation, ils sont soumis à des conditions de travail extrêmement sévères de température, de pression, d'environnement chimique et de contraintes mécaniques. En ce qui concerne ces dernières, les cahiers des charges imposent, parfois, que l'élément tubulaire à base de matériau élastomère puisse se dilater et se contracter de manière réversible à trois fois son diamètre extérieur (par exemple passer d'un diamètre initial de 52 mm à un diamètre final de 162 mm et vice-versa) et résister à une pression de service qui peut être de l'ordre de 100 bars au moins, cette valeur correspondant à celle nécessaire pour plaquer l'élément tubulaire sur la face interne de la conduite et aux contre-pressions différentielles exercées de part et d'autre du dispositif dans cette condition. La plupart des dispositifs connus à élément annulaire déformable à base d'élastomère, -y compris munis d'armatures-, ne permettent pas de satisfaire complètement les conditions imposées d'exploitation réelle et, comme indiqué dans l'article présenté lors de la Conférence mentionnée ci-dessus, ou encore dans FR-A-2 625 254, il faut associer audit élément tubulaire dilatable des renforts métalliques d'extrémité. Ceux-ci doivent être agencés de manière très spécifique, ce qui augmente d'autant le coût du dispositif, d'une part, et sont parfois sujets à des incidents de fonctionnement, d'autre part, lors du retour du "packer" à sa condition non dilatée ce qui ne permet pas une réutilisation du dispositif.

Le problème se pose, par conséquent, de fournir un dispositif de flexible haute-pression dilatable qui ne présente pas les inconvénients des dispositifs connus et c'est, d'une façon générale, un but de l'invention de fournir un tel dispositif.

C'est, aussi, un but de l'invention de fournir un tel dispositif qui, contrairement à la plupart des "packers" actuellement connus, puisse être réutilisé un certain nombre de fois de façon sûre.

C'est, aussi, un but de l'invention de fournir un tel dispositif qui procure d'aussi bons résultats d'obturation que les dispositifs connus et qui, en particulier, lorsqu'il est dilaté, se plaque fortement sur la paroi du forage ou du tubage de puits dont il doit assurer l'étanchéité, et cela nonobstant les contraintes extrêmement fortes qui apparaissent (et qui peuvent être de l'ordre de quelques tonnes) dans les zones de liaison de l'élément tubulaire aux raccords d'extrémité lorsque le diamètre externe dudit élément tubulaire est multiplié par trois.

C'est, encore, un but de l'invention de fournir un tel dispositif bien approprié à l'exploitation de forages gaziers et/ou pétroliers où les conditions de mise en oeuvre comprennent des cycles de gonflage de courte durée, de maintien en pression de plusieurs heures et de dégonflage avec retour, -dans la limite de quelques pour cents seulement-, au diamètre initial de la partie déformable.

On sait que pour permettre une dilatation de cette dernière, les armatures qu'elle comporte doivent être posées à un angle très faible par rapport à son axe longitudinal, de l'ordre de 10 à 15°, et suivant plusieurs nappes séparées par des entreplis de matériau élastomère. Cependant, cette mesure seule ne permet pas d'aboutir à des résultats satisfaisants et c'est pourquoi la technique antérieure propose, par exemple dans GB-A-2 099 541, EP-A2-0 264 973, CA-A-2 081 395 et US-1-5 205 567, des moyens de renfort supplémentaires constitués par une pluralité d'enroulements hélicoïdaux de câblés, c'est-à-dire en fait une augmentation quantitative du nombre d'armatures de renfort dont la nature fondamentale n'est pas modifiée. On constate cependant, lors de la mise en oeuvre de dispositifs de ce type, que la multiplication des armatures de l'élément annulaire déformable n'améliore pas de façon notable les performances et ne permet donc pas de résoudre le problème posé, l'élément annulaire prenant dans tous les cas une forme "d'os long", c'est-à-dire à renflements d'extrémités de plus grand diamètre que la partie médiane, le gonflement plus important dans lesdites zones d'extrémité conduisant à un éclatement prématuré dans ces zones.

On a proposé dans US-A-3 542 127 de renforcer les extrémités de la partie déformable par des jupes elles-mêmes déformables qui assurent l'obturation permanente d'un puits en cas de rupture ou de détérioration de la partie déformable. Cependant, ces jupes ne permettent pas d'apporter une solution au problème posé par la présente invention.

L'invention propose un dispositif de flexible haute-pression dilatable en particulier pour l'obturation de conduites de puits dans des forages gaziers ou pétroliers, comportant deux embouts d'extrémité et un élément tubulaire à base de matériau élastomère comprenant au moins deux nappes de câblés textiles très résistants enroulés en hélice autour de l'axe longitudinal dudit élément, avec un angle faible de 10 à 15° environ par rapport à cet axe, ces nappes étant à disposition croisée deux à deux par rapport à l'axe précité, caractérisé en ce que chaque nappe est tramée et comporte dans le sens chaîne des câblés textiles, en particulier à base de fibres d'aramide, qui sont séparés les uns des autres d'une distance d'espacement prédéterminée et qui sont noyés dans le matériau élastomère précité en adhérant à celui-ci, le dispositif comprenant de plus au moins une nappe de câblés longitudinaux qui sont parallèles à l'axe longitudinal précité sur toute la longueur du dispositif et sont noyés dans le matériau élastomère dudit élément en adhérant à ce matériau.

Dans le dispositif selon l'invention, les câblés textiles à base de fibres aramide, comme du Kevlar (une Marque Déposée de la Société DUPONT DE NEMOURS) sont chacun totalement enrobés dudit matériau élastomère auquel ils sont rendus fortement adhérents, des câblés adjacents n'étant pas en contact les uns avec les autres.

Selon une autre caractéristique de l'invention, l'espacement de câblés adjacents est prédéterminé et est maintenu à une valeur sensiblement constante lors de la fabrication du dispositif, par exemple à l'aide de moyens de positionnement comme des peignes métalliques ou analogues.

L'utilisation de câblés textiles, en particulier à base de fibres aramide dont le coefficient de conductibilité thermique est très nettement inférieur à celui de l'acier, confère en outre au dispositif selon l'invention (dans lequel la masse de câblés est importante) un pouvoir d'isolation thermique supérieur à celui des dispositifs connus et, partant, une température de fonctionnement à l'intérieur du dispositif plus faible, laquelle entraîne à son tour un accroissement de la durée de vie.

Dans un dispositif selon l'invention, dont les armatures de l'élément tubulaire sont des fils ou câblés en nappes tramées, -dites nappes de pression-, le gonflage dudit élément tubulaire provoque à la fois l'écartement desdits fils ou câblés, par allongement de la matière élastomère se trouvant entre deux fils ou câblés adjacents et une faible déviation angulaire desdits fils ou câblés par rapport à l'angle de pose initial, d'environ 10 à 15°, -et qui est celui de la condition non sollicitée du dispositif-, le gonflage ayant lieu à plus basse pression qu'avec les dispositifs connus de l'Art Antérieur.

Selon une autre caractéristique de l'invention, la nappe précitée de câblés longitudinaux est tramée et les câblés longitudinaux sont espacés les uns des autres d'une distance prédéterminée.

Par ailleurs, la ou les nappes de câblés longitudinaux peuvent être au voisinage de la périphérie extérieure de l'élément tubulaire, et/ou au voisinage de sa périphérie intérieure, et/ou entre deux paires de nappes de câblés croisées, et/ou entre des nappes de câblés croisées.

Dans un mode d'exécution du dispositif, chaque nappe est à base de câblés de fibres d'aramide de 3300/1/3 dtex (c'est-à-dire de câblés à trois fils retordus, chaque fil monofilamentaire ayant un titrage de 3300 dtex) traités par calandrage ou par enduction avec un produit d'adhérisation à base de polychloroprène, par exemple.

Avec une telle structure, et contrairement ici aussi aux dispositifs connus, les câblés ne subissent pas de distension, avec pour conséquence un retour desdits câblés à leur position initiale, après dégonflage, favorable à la reprise, par le dispositif, de son diamètre initial.

Dans une variante, l'invention propose, pour diminuer les contraintes au voisinage des extrémités de l'élément tubulaire dilatable, de conformer les nappes tramées de pression pour que l'angle des fils ou câblés constitutifs de ces nappes soit différent dans lesdites zones d'extrémité de ce qu'il est dans la zone médiane de l'élément tubulaire.

Dans une forme de réalisation, l'angle de pose des fils ou câblés constitutifs des nappes de pression est de l'ordre de 10-12° dans la zone médiane où ledit élément doit se dilater jusqu'à trois fois son diamètre initial et est de l'ordre de 20° dans les zones d'extrémité.

Dans une autre variante, l'invention propose de limiter les contraintes au voisinage des zones d'extrémité en enfilant sur lesdites zones des gaines ou "chaussettes" à bordures renforcées lesquelles, après mise en place, sont retroussées puis bloquées par des tirants longitudinaux.

Dans encore une autre variante, l'invention fait application, pour diminuer les contraintes dans les zones d'extrémité du dispositif, d'un enroulement de tissu déformable radialement.

D'autres caractéristiques et avantages de l'invention apparaîtront de la description qui suit, faite à titre d'exemple et en référence au dessin annexé dans lequel :
- la figure 1 est une vue très schématique d'un dispositif selon l'invention ;
- la figure 2 montre deux dispositifs selon l'invention, en condition dilatée, et tels que mis en oeuvre pour une opération de stimulation d'un puits pétrolier ;
- la figure 3 illustre, avec arrachement partiel, la structure de base d'un élément annulaire déformable de dispositif selon l'invention ;
- la figure 4 est une vue en coupe selon la ligne 4-4 de la figure 3 ;
- la figure 5 est une vue très schématique en perspective, d'un dispositif selon l'invention ;
- la figure 6 est une vue très schématique illustrant pour une autre réalisation de l'invention une disposition avantageuse des fils ou câblés d'une nappe d'armature de pression, au repos ;
- la figure 7 est une vue schématique illustrant la déformation d'un élément annulaire de dispositif connu ;
- la figure 8 est une vue analogue à celle de la figure 7, mais pour un dispositif selon l'invention ;
- la figure 9 est une vue analogue à celle de la figure 3 mais pour une forme de réalisation préférée de l'invention ;
- la figure 10 est une vue en coupe selon la ligne 10-10 de la figure 9.

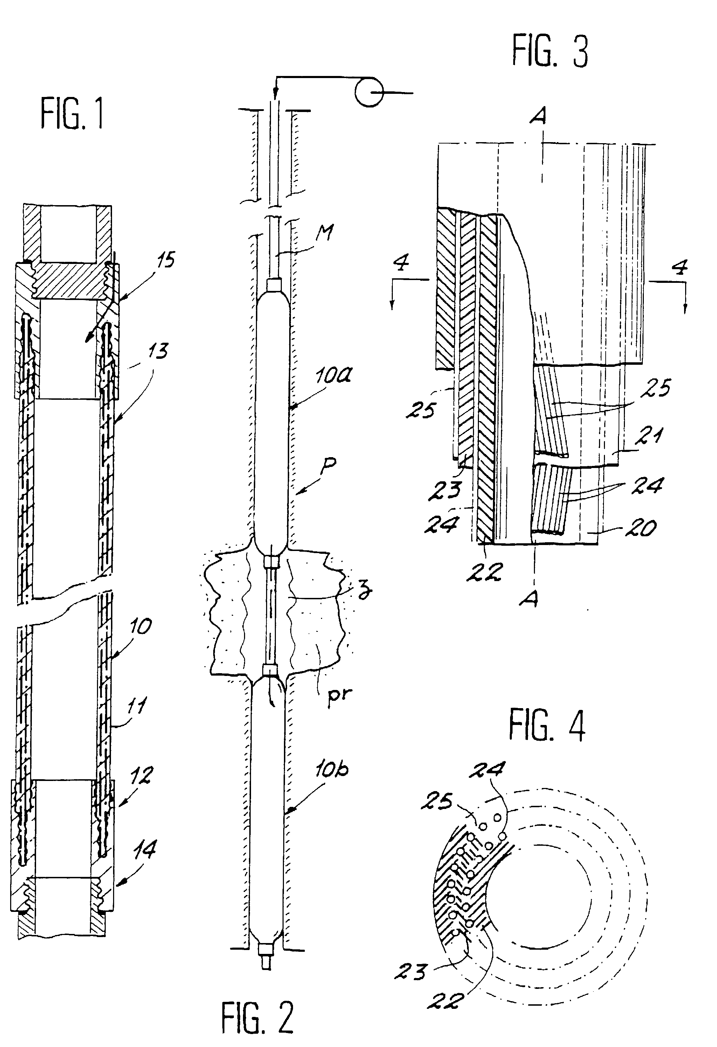

On se réfère d'abord aux figures 1 et 2 qui montrent, respectivement et de façon très schématique, un dispositif de flexible haute-pression dilatable et un exemple d'utilisation d'un tel flexible dans le domaine de l'exploitation de forages pétroliers. Le dispositif de flexible haute pression dilatable ou "packer", 10, comprend un élément tubulaire dilatable ou membrane 11, à base de matériau élastomère, fixé à ses deux extrémités 12 et 13 à des embouts 14 et 15, respectivement, lesquels sont avantageusement du type de ceux décrits dans EP-A1-0 516 515 au nom de la Demanderesse, sans que cette indication ait cependant quelque caractère limitatif que ce soit.

Lorsque de tels dispositifs de "packer" sont mis en oeuvre pour une opération de stimulation d'un puits pétrolier, deux dispositifs 10a et 10b d'un diamètre externe à l'état non dilaté qui peut être, dans une forme de réalisation, d'environ 54 mm sont montés sur un mandrin M et descendus au travers d'un "tubing de production" de diamètre légèrement supérieur pour être placés de part et d'autre d'une zone de production pr du puits P. Les packers 10a et 10b sont alors dilatés pour isoler une zone z dans laquelle on injecte, par des dispositifs appropriés non représentés, des boues acides destinées à stimuler la zone de production. Le diamètre du puits ou de son "casing" est, dans certains cas, de l'ordre de 162 mm, de sorte que pour obtenir une étanchéité satisfaisante la membrane 11 doit être dilatée d'environ trois fois son diamètre initial. Elle doit, aussi, pouvoir encaisser des pressions élevées, de l'ordre d'au moins 100 bars, -c'est-à-dire une pression de gonflage de l'ordre de 30-40 bars qui plaque la membrane sur le "casing" et des contre-pressions différentielles exercées de part et d'autre de ladite membrane et qui peuvent être de l'ordre de 60 bars ou davantage-, et cela dans un environnement difficile (température de service comprise entre 20 et 120°C, humidité pouvant varier de 0 à 100 % entre le stockage et l'utilisation, présence d'hydrocarbures lourds et de produits chimiques acides et corrosifs).

Pour fournir un dispositif de flexible haute-pression dilatable propre à être utilisé dans de telles conditions, l'invention propose que la membrane 11 (fixée à ses extrémités aux embouts 14 et 15 dont le premier est d'ailleurs de façon en soi connue monté mobile sur le mandrin M) soit constituée par une matrice en matériau(x) élastomère(s), avantageusement un mélange de caoutchoucs présentant une excellente rémanence sous fort allongement, d'une part et, d'autre part, les caractéristiques requises de résistance mécanique et de résistance aux produits chimiques. Dans une telle matrice qui peut être, par exemple, du type polychloroprène, sont noyés au moins deux jeux d'armatures de renfort, dites "de pression" et qui, selon l'invention, sont sous forme de nappes tramées de fils ou câblés textiles, avantageusement à base de fibres aramide comme du Kevlar (une Marque Déposée de la Société DUPONT DE NEMOURS). Comme montré sur la figure 3, au moins deux nappes croisées 20 et 21 sont disposées, la première, sur un tube interne 22 et la seconde sur la première avec interposition entre elles d'un entreplis 23, par exemple, mais non nécessairement, en le même matériau élastomère que celui du tube interne 22 ; les deux nappes 20, 21, -qui sont à disposition croisée par rapport à l'axe longitudinal A de la membrane-, sont constituées, l'une et l'autre, par des fils ou câblés, 24 pour la nappe 20 et 25 pour la nappe 21 totalement enrobés chacun de matériau élastomère et posés à un angle α de l'ordre de 10 à 15° par rapport à l'axe A. Les câblés 24 et 25, qui sont fortement adhérisés au matériau élastomère dans lequel ils sont noyés, ont un module de Young plus fort que celui dudit matériau et sont disposés de manière analogue aux fils de chaîne d'un tissu en étant maintenus à un espacement sensiblement constant et prédéterminé les uns des autres, par exemple à l'aide de peignes métalliques de positionnement lors de leur mise en place. On obtient, avec une telle structure des nappes de pression, un gonflement facile et immédiat de la membrane 11 même sous faible pression, le diamètre de celle-ci passant de sa condition initiale au diamètre d à une valeur d'environ 3 d pour une pression comprise entre 30 et 60 bars. On constate, en outre, que les câblés restent parfaitement en place et reviennent à leur position initiale, après dégonflage, sans distension.

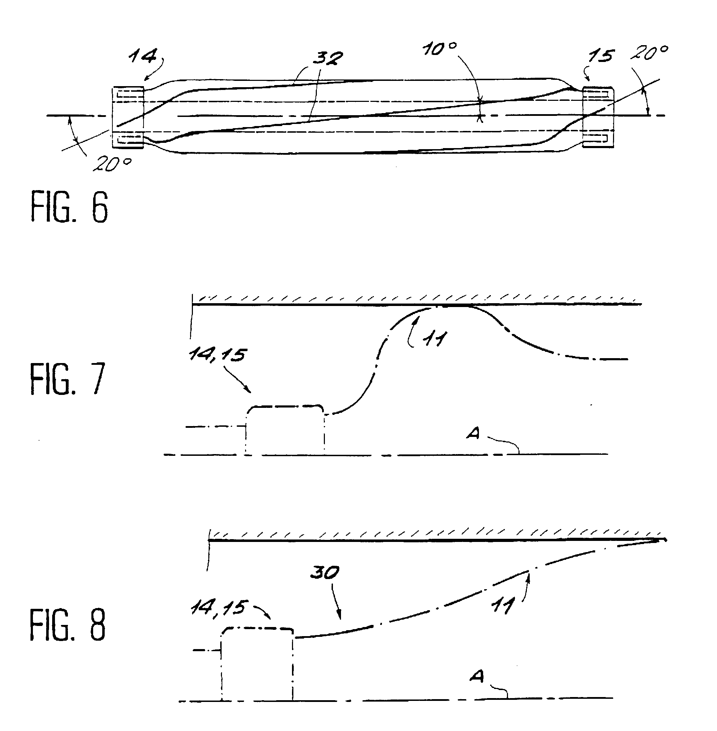

Lorsqu'on associe à cette structure des moyens qui limitent les contraintes qui apparaissent au voisinage de ses extrémités lors du gonflage, la membrane 11 présente, -dans lesdites zones d'extrémités et dans sa condition gonflée-, une forme proche de celle montrée sur la figure 8, c'est-à-dire avec une partie 30 dont la section par un plan longitudinal est régulière à partir des embouts 14, 15 jusqu'à la partie dilatée de la membrane, alors que pour des dispositifs de l'Art Antérieur et démunis des moyens de l'invention, la forme après gonflage de la membrane est celle dite en "os long", figure 7, où les extrémités sont de plus grand diamètre que la partie centrale.

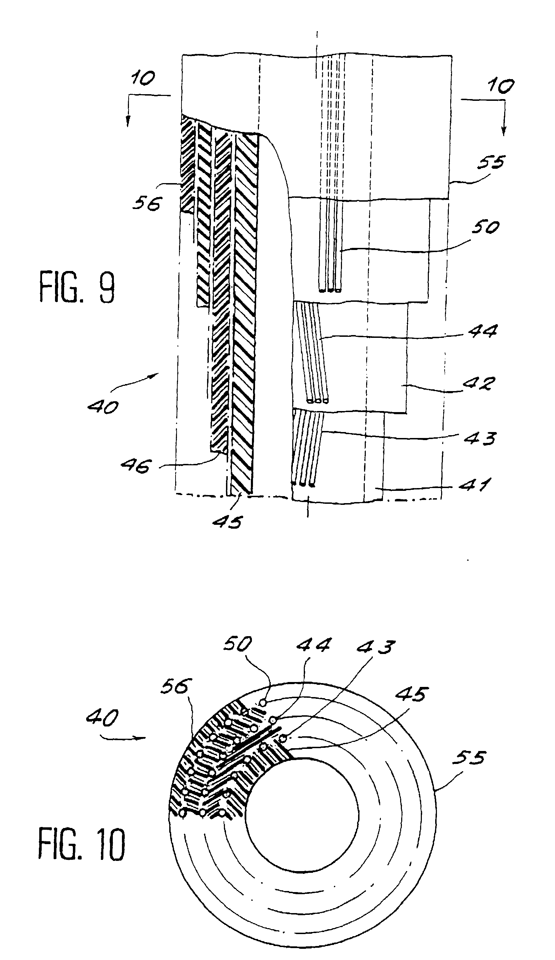

Pour constituer les moyens qui limitent les contraintes à l'état gonflé de l'élément tubulaire dans les zones de raccord dudit élément aux embouts du dispositif l'invention propose, dans une réalisation préférée, figures 9 et 10, au moins une nappe de maintien tramée dont les fils ou câblés longitudinaux 50 s'étendent sur sensiblement toute la longueur du dispositif et qui sont noyés dans le matériau élastomère constitutif de la membrane 40 auquel ils sont fortement adhérisés, comme les autres fils ou câblés 43 et 44 des nappes tramées de pression 41 et 42, posées à un angle de l'ordre de 10 à 15° par rapport à l'axe longitudinal de la membrane, la première sur un tube central 45 en matériau élastomère et la seconde sur un entreplis 46, par exemple, mais non nécessairement, en le même matériau, les deux nappes étant à disposition croisée par rapport à l'axe longitudinal A.

On constate qu'une telle structure de la membrane 40, où les renforts longitudinaux 50 sont par exemple disposés au voisinage de la périphérie 55 de la membrane constituée par un tube de matériau élastomère 56, conduit, en exploitation, à un "packer" qui répond de façon satisfaisante au cahier des charges.

Des nappes de câblés longitudinaux 50 peuvent également être prévues au voisinage de la surface interne de l'élément, et/ou entre des paires de nappes de câblés croisées, telles que la paire de nappes 41, 42, ou même entre deux nappes croisées 41, 42.

Dans une variante de réalisation l'invention propose, pour diminuer les contraintes qui apparaissent au gonflage de l'élément tubulaire dilatable, notamment au voisinage de ses extrémités, de disposer les câblés des armatures des nappes de pression comme montré sur la figure 6, c'est-à-dire de manière à ce qu'ils fassent, -dans leur condition initiale de pose-, un angle variable avec l'axe A de la membrane, par exemple de l'ordre de 10-12° dans la zone médiane et de l'ordre de 20° au voisinage des extrémités où sont prévus les embouts 14 et 15. Avec cette structure, qui peut être réalisée en emprisonnant les câblés dans des bandes de matériau élastomère de largeur variable et en procédant ensuite à un enroulement approprié desdites bandes, la déformation constatée au voisinage des extrémités de la membrane, après gonflage, est à transition régulière entre les embouts 14 et 15, -dont le diamètre est celui de la membrane à l'état initial-, et ladite membrane dilatée.

Les contraintes supportées par chaque nappe peuvent encore être réduites en prévoyant plus de deux nappes tramées, d'une part, et en jouant sur le rapport de la densité des câblés d'armature à la quantité de matériau élastomère dans lequel ils sont noyés, d'autre part.

Dans un autre mode d'exécution, non représenté, l'invention prévoit de placer dans chaque zone d'extrémité du dispositif un enroulement d'un tissu déformable radialement.

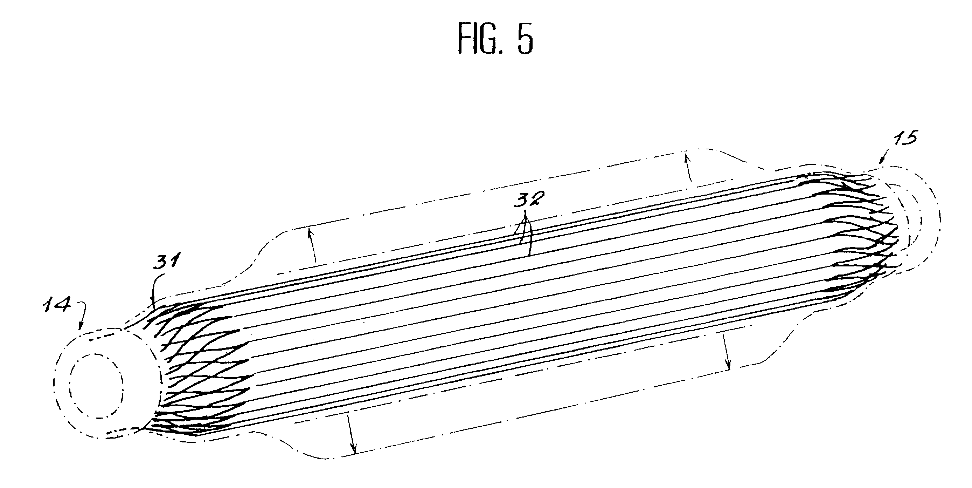

Dans encore un autre mode d'exécution, figure 5, l'invention propose de rapporter au voisinage des raccords des extrémités de la membrane 11 aux embouts 14 et 15, des gaines ou chaussettes 31, avantageusement à bordures renforcées lesquelles, après mise en place, sont retroussées puis bloquées par des tirants longitudinaux, 32.

### EXEMPLE

Une membrane 40 d'un dispositif de "packer" selon l'invention a été réalisée à partir d'un tube interne en polychloroprène d'un diamètre intérieur de 26 mm et d'une épaisseur de 4 mm sur lequel a été rapporté une première nappe tramée d'armatures en aramide 3300/1/3 dtex et sur ladite nappe, un entreplis de 2,4 mm d'épaisseur, lequel est lui même recouvert d'une seconde nappe tramée d'armatures en aramide 3300/1/3 dtex. Sur cette seconde nappe est ensuite déposé un nouvel entreplis, lui-même recouvert d'une troisième nappe tramée de 72 câblés d'armatures en aramide 3300/1/3 dtex elles-mêmes recouvertes d'un revêtement tubulaire dont le diamètre externe est de 53 mm.

Les essais conduits avec un tel "packer" ont permis d'atteindre un gonflement de 3 diamètres avec une pression de l'ordre de 50 bars, la pression de rupture obtenue étant supérieure à 100 bars dans un tube "casing" de 152 mm.

## Revendications

1. Dispositif de flexible haute-pression dilatable en particulier pour l'obturation de conduites de puits dans des forages gaziers ou pétroliers, comportant deux embouts d'extrémité (14, 15) et un élément tubulaire (11, 40) à base de matériau élastomère comprenant au moins deux nappes (20, 21, 41, 42) de câblés textiles très résitants enroulés en hélice autour de l'axe longitudinal (A A) dudit élément, avec un angle faible de 10 à 15° environ par rapport à cet axe, ces nappes étant à disposition croisée deux à deux par rapport à l'axe précité, caractérisé en ce que chaque nappe (20, 21, 41, 42) est tramée et comporte dans le sens chaîne des câblés textiles (24, 25, 43, 44), en particulier à base de fibres d'aramide, qui sont séparés les uns des autres d'une distance d'espacement prédéterminée et qui sont noyés dans le matériau élastomère précité en adhérant à celui-ci, le dispositif comprenant également au moins une nappe de câblés (50) qui sont parallèles à l'axe longitudinal (A A) précité sur toute la longueur du dispositif et sont noyés dans le matériau élastomère dudit élément (11, 40) en adhérant à ce matériau.

2. Dispositif selon la revendication 1, caractérisé en ce que la nappe de câblés (50) parallèles à l'axe (A A) est tramée et les câblés longitudinaux y sont espacés les uns des autres d'une distance prédéterminée.

3. Dispositif selon la revendication 1 ou 2, caractérisé en ce que la distance d'espacement des câblés adjacents des nappes précitées est maintenue à une valeur sensiblement constante lors de la fabrication du dispositif.

4. Dispositif selon l'une quelconque des revendications précédentes, caractérisé en ce que chaque nappe précitée (20, 21, 41, 42, 50) est à base de câblés de fibres d'aramide, avantageusement formés de trois fils de 3300 dtex traités par calandrage ou par enduction avec un produit d'adhésion.

5. Dispositif selon l'une des revendications précédentes, caractérisé en ce que la ou les nappes de câblés (50) parallèles à l'axe (A A) sont au voisinage de la périphérie externe (55) de l'élément tubulaire, et/ou au voisinage de sa périphérie interne, et/ou entre des paires de nappes de câblés croisées, et/ou entre deux nappes croisées (41, 42).

6. Dispositif selon l'une des revendications précédentes, caractérisé en ce qu'il est thermiquement isolant.

7. Dispositif selon l'une des revendications précédentes, caractérisé en ce que les nappes tramées (20, 21, 41, 42) de câblés enroulés en hélice sont conformées pour que l'angle des câblés soit différent dans les zones d'extrémité de l'élément tubulaire de ce qu'il est dans la zone médiane de cet élément.

8. Dispositif selon la revendication 7, caractérisé en ce que l'angle de pose initial des câblés constitutifs des nappes (20, 21, 41, 42) est de l'ordre de 10-12° dans la zone médiane, où ledit élément doit se dilater jusqu'à trois fois son diamètre initial, et est de 20° dans les zones d'extrémité de cet élément.

9. Dispositif selon l'une des revendications précédentes, caractérisé en ce que les contraintes qui apparaissent lors du gonflage sont limitées au voisinage des extrémités de l'élément tubulaire (11) par des gaines ou chaussettes (31) à bordures renforcées enfilées sur lesdites extrémités, ces gaines ou chaussettes étant, après mise en place, retroussées puis bloquées par des tirants (32).

10. Dispositif selon l'une des revendications précédentes, caractérisé en ce que les contraintes qui apparaissent lors du gonflage sont limitées au voisinage des extrémités de l'élément tubulaire par des enroulements d'un tissu déformable radialement.

## Patentansprüche

1. Flexible, unter hohem Druck dehnbare Einrichtung, insbesondere für das Verschließen von Schacht kanälen in Gas- oder Erdölbohrungen, die zwei Endansatzstücke (14,15) und ein rohrförmiges Element (11, 40) auf der Basis von Elastomermaterial hat, umfassend wenigstens zwei Schichten (20, 21, 41, 42) aus sehr widerstandsfähigen Textilkabeln, die schnecken- oder schraubenförmig um die Längsachse (A A) des Elements mit einem geringen Winkel von ungefähr 10 bis 15° mit Bezug auf diese Achse gewickelt sind, wobei diese Schichten in gekreuzter Anordnung zu zweien mit Bezug auf die vorgenannte Achse vorgesehen sind, dadurch **gekennzeichnet**, daß jede Schicht (20, 21, 41, 42) eingeschossen bzw. eingeschlagen ist und in der Kettenrichtung Textilkabel (24,25,43,44), insbesondere auf der Basis von Aramidfasern, enthält, welche voneinander durch einen vorbestimmten Zwischenraumabstand getrennt sind und welche in dem vorgenannten Elastomermaterial versenkt sind, indem sie an demselben anhaften, wobei die Vorrichtung außerdem wenigstens eine Schicht von Kabeln (50) enthält, die parallel zu der vorgenannten Längsachse (A A), über die gesamte Länge der Einrichtung sind und in dem Elastomermaterial dieses Elements (11, 14) versenkt sind, indem sie an diesem Material anhaften.

2. Einrichtung gemäß Anspruch 1, dadurch **gekennzeichnet**, daß die Schicht von Kabeln (50), welche parallel zu der Achse (A A) sind, eingeschossen bzw. eingeschlagen ist und die Längskabel daselbst voneinander um eine vorbestimmte Entfernung beabstandet sind.

3. Einrichtung gemäß Anspruch 1 oder 2, dadurch **gekennzeichnet**, daß der Zwischenraumabstand der benachbarten Kabel der vorgenannten Schichten während der Herstellung der Einrichtung auf einem im wesentlichen konstanten Wert gehalten ist.

4. Einrichtung gemäß irgendeinem der vorhergehenden Ansprüche, dadurch **gekennzeichnet**, daß jede vorgenannte Schicht (20, 21, 41, 42, 50) auf der Basis von Kabeln aus Aramidfasern besteht, die vorteilhafterweise aus drei Fäden von 3.300 dtex gebildet sind, welche durch Kalandrierung oder durch einen dünnen Überzug mit einem Haft- bzw. Klebemittel behandelt sind.

5. Einrichtung gemäß einem der vorhergehenden Ansprüche, dadurch **gekennzeichnet**, daß sich die Schicht oder Schichten aus zu der Achse (A A) parallelen Kabeln (50) in der Nähe des äußeren Umfangs (55) des rohrförmigen Elements und/oder in der Nähe seines inneren Umfangs und/oder zwischen den Paaren der Schichten von gekreuzten Kabeln und/oder zwischen zwei gekreuzten Schichten (41, 42) befindet bzw. befinden.

6. Einrichtung gemäß einem der vorhergehenden Ansprüche, dadurch **gekennzeichnet**, daß sie thermisch isolierend ist.

7. Einrichtung gemäß einem der vorhergehenden Ansprüche, dadurch **gekennzeichnet**, daß die eingeschossenen bzw. eingeschlagenen Schichten (20, 21, 41, 42) aus schnecken- bzw. schraubenförmig gewickelten Kabeln so gestaltet sind, daß der Winkel der Kabel in den Endzonen des rohrförmigen Elements unterschiedlich gegenüber jenem in der mittleren Zone dieses Elements ist.

8. Einrichtung gemäß Anspruch 7, dadurch**gekennzeichnet,** daß der Winkel der anfänglichen Stellung der die Schichten (20, 21, 41, 42) bildenden Kabel in der Größenordnung von 10 bis 12° in der mittleren Zone ist, wo das Element sich bis zum dreifachen seines Anfangsdurchmessers ausdehnen muß, und 20° in den Endzonen dieses Elements ist.

9. Einrichtung gemäß einem der vorhergehenden Ansprüche, dadurch **gekennzeichnet,** daß die Beanspruchungen, die während des Aufblähens auftreten, in der Nähe der Enden des rohrförmigen Elements (11) durch Hüllen bzw. Hülsen oder Socken (31) mit verstärkten Rändern, die über die genannten Enden aufgezogen sind, beschränkt sind, wobei diese Hüllen bzw. Hülsen oder Socken, nachdem sie an Ort und Stelle gebracht worden sind, gerafft, danach durch Verankerungen bzw. Laschen bzw. Zugglieder (32) blockiert sind.

10. Einrichtung gemäß einem der vorhergenden Ansprüche , dadurch **gekennzeichnet,** daß die Beanspruchungen, welche während des Aufblähens auftreten, in der Nähe der Enden des rohrförmigen Elements durch Wicklungen eines radial deformierbaren Textilmaterials bzw. Tuchs begrenzt sind.

## Claims

1. An expandable high-pressure flexible-tube device, in particular for sealing piping in gas or oil fields, comprising two end pieces (14, 15) and a tubular element (11, 40) composed of elastomeric material comprising at least two sheets of very strong textile cords (20, 21, 41, 42) wound in a helix about the longitudinal axis (A A) of said element, at a small angle of about 10° to 15° relative to said axis, the sheets being crossed relative to said axis,
characterized in that each sheet (20, 21, 41, 42) is stranded and comprises, in the warp direction, textile cords (24, 25, 43, 44), in particular composed of aramid fibers, mutually separated by a predetermined spacing, and which are embedded in said elastomeric material by being bonded thereto, the device also comprising at least one sheet of cords (50) which are parallel to said longitudinal axis (A A) over the whole length of the device and which are embedded in the elastomeric material of said element (11, 40) by being bonded to said material.

2. A device according to claim 1, characterized in that the sheet of cords (50) parallel to the axis (A A) is stranded and the longitudinal cords are mutually spaced apart by a predetermined distance.

3. A device according to claim 1 or 2, characterized in that the spacing of adjacent cords in said sheets is held at a substantially constant value during manufacture of the device.

4. A device according to any preceding claim, characterized in that each said sheet (20, 21, 41, 42, 50) is composed of cords of aramid fibers, advantageously formed from three yarns of 3300 dtex, treated by rolling or coating with a bonding substance.

5. A device according to any preceding claim, characterized in that the sheet or sheets of cords (50) parallel to the axis (A A) is/are located close to the outer periphery (55) of the tubular element, and/or close to the inner periphery, and/or between pairs of crossed sheets of cords, and/or between two crossed sheets (41, 42).

6. A device according to any preceding claim, characterized in that it is thermally insulating.

7. A device according to any preceding claim, characterized in that the stranded sheets (20, 21, 41, 42) of helically wound cords are conformed such that the angle of the cords is different in the end zones of the tubular element from that in the middle zone of said element.

8. A device according to claim 7, characterized in that the initial laying angle of the constituent cords of said sheets (20, 21, 41, 42) is of the order of 10°-12° in the middle zone, where the element has to expand by up to three times its initial diameter, and is 20° in the end zones of said element.

9. A device according to any preceding claim, characterized in that the stress which occurs during inflation is limited close to the ends of the tubular element (11) by sleeves (31) with reinforced edges attached to said ends, the sleeves being turned back after placing in position and fixed by ties (32).

10. A device according to any preceding claim, characterized in that the stress which occurs during inflation is limited close to the ends of the tubular element by windings of a radially deformable fabric.
